# FASCICULE DE BREVET EUROPEEN

(11) **EP 2 229 271 B1**
(45) Date de publication et mention de la délivrance du brevet: **03.05.2017**
(21) Numéro de dépôt: 09703786.5
(22) Date de dépôt: 08.01.2009
(51) Int. Cl.: B29C 49/48, B65D 1/02, B29C 33/42, B29K 67/00, B29C 49/06

(54) **FOND DE MOULE POUR LA FABRICATION DE RECIPIENTS THERMOPLASTIQUES ET RECIPIENT OBTENU**
FORMWERZEUGBODEN ZUR HERSTELLUNG THERMOPLASTISCHER BEHÄLTER SOWIE DAMIT HERGESTELLTER BEHÄLTER
BOTTOM OF A MOULD FOR PRODUCING THERMOPLASTIC CONTAINERS, AND CONTAINER PRODUCED

(30) Priorité: 09.01.2008 FR 0850095
(43) Date de publication de la demande: 22.09.2010
(73) Titulaire: Sidel Participations, 76930 Octeville Sur Mer (FR)
(72) Inventeur: BOUKOBZA, Michel, F-76930 Octeville-sur-mer (FR)
(74) Mandataire: Siloret, Patrick
(86) Numéro de dépôt international: PCT/FR2009/050018
(87) Numéro de publication internationale: WO 2009/092936

(56) Documents cités:
- EP-A- 1 471 010
- WO-A-98/29314
- FR-A- 1 436 030
- FR-A- 2 892 048
- GB-A- 2 041 286
- GB-A- 2 379 206
- JP-A- 10 139 029
- JP-A- 2002 332 022
- US-A1- 2004 251 258

## Description

La présente invention concerne, d'une manière générale, le domaine de la fabrication, par soufflage ou étirage-soufflage, de récipients, notamment de bouteilles, en matière thermoplastique telle que du PET (polyéthylène téréphtalate), par soufflage ou étirage-soufflage de préformes.

Plus spécifiquement, l'invention concerne des perfectionnements apportés aux fonds des récipients et à leurs moules de fabrication et, en particulier, aux fonds de moules.

D'une manière générale, la fabrication des récipients en matière thermoplastique est relativement complexe et, dans ce domaine, le fond des récipients constitue l'une des parties qui requiert le plus d'attention. C'est en effet le fond de récipient qui supporte le poids de la colonne de liquide contenu dans le récipient et, dans le cas où il présente une résistance mécanique insuffisante, il perd sa forme et le récipient ne peut plus reposer de façon stable sur un support plan.

Le fond de récipient constitue donc la partie du récipient dont le formage correct par l'opération de soufflage ou d'étirage-soufflage doit être particulièrement soigné et c'est une partie délicate à réaliser, du fait même que l'épaisseur de la matière thermoplastique dans le fond de la préforme y est sensiblement plus importante qu'ailleurs, ce qui conduit à un étirage plus lent et à une prise de forme moins facile au niveau de ce fond de récipient.

Un défaut de répartition de la matière au niveau du fond du récipient peut avoir une influence sur la stabilité de ce récipient. Ce défaut de répartition peut se situer dans la partie centrale du fond et/ou sur la paroi périphérique, ce qui risque de modifier la position et/ou l'inclinaison de l'assise du récipient, et ce dernier risque de ne plus reposer, de façon stable, sur un support plan.

Or, pour améliorer sa résistance mécanique, le fond présente habituellement une forme complexe, voire très complexe, avec de nombreux reliefs en creux et en saillie dont la conformation correcte est censée conduire à la résistance mécanique souhaitée.

Or, en quelqu'endroit que ce soit du fond, il faut que la résistance mécanique soit suffisante pour éviter l'affaissement du fond sous l'action du poids du liquide et de la pression interne (ce type de récipient étant souvent destiné à contenir des liquides carbonatés).

Le document US 2004/0251258, par exemple, montre plusieurs modèles de récipients qui comportent un fond relativement complexe ; ce fond comprend plusieurs zones distinctes ayant des diamètres différents avec des rayons de courbure qui évoluent également d'une zone à l'autre, formant en fait un fond étagé. Le diamètre de la surface d'assise du flacon est relativement modeste par rapport au diamètre du corps du récipient et la partie qui entoure cette surface d'assise est surmontée d'un deuxième niveau de fond qui se présente sous la forme d'une cuvette, laquelle cuvette est munie de renforts en forme de rainures verticales qui améliorent sa résistance.

La forme complexe des récipients, et en particulier de leur fond, exige une grande maîtrise des conditions de soufflage, notamment de la pression de soufflage, pour parvenir à des récipients corrects.

La déformation et la mise en forme de la matière dans la région du fond sont actuellement obtenues en mettant en oeuvre un soufflage sous pression élevée (typiquement de l'ordre de 40x10⁵ Pa) qui permet de conjuguer cette déformation et mise en volume de la matière avec la pratique de cadences de production élevées de plusieurs milliers de récipients par heure.

Cependant, la production d'un fluide de soufflage (en général de l'air) sous une pression aussi élevée est très coûteuse en matériel et en énergie électrique consommée et les fabricants souhaitent faire des économies sur ce poste, en mettant en oeuvre des pressions moindres, donc des matériels moins coûteux. De plus, un accroissement des cadences de production est difficilement envisageable dans les conditions de fabrication actuelles.

On soulignera aussi la trajectoire parfois complexe de la matière pour passer de sa forme initiale (préforme) à celle de la surface de la paroi du moule qui correspond à l'empreinte du récipient final, laquelle empreinte peut imposer à cette matière, surtout au niveau du fond dudit récipient, un parcours avec des changements de direction voire des points d'inflexion, et ces changements de direction peuvent correspondre à des variations angulaires pouvant aller jusqu'à 90°, voire plus.

Ceci, allié à l'épaisseur notable de la matière dans cette zone du fond de la préforme, peut conduire à un plaquage insuffisant de la matière sur la paroi de la cavité de moulage et à un mauvais refroidissement de la matière contre le moule ; il peut en résulter une moindre qualité de la totalité ou de certaines parties du fond de récipient. En outre, ce parcours important de la matière pour aller de la préforme à la paroi du moule nécessite un temps certain.

Or, les fabricants de récipients en matière thermoplastique recherchent de façon permanente à améliorer les conditions économiques de production, en tentant de produire des récipients nécessitant une moindre quantité de matière thermoplastique, sous une pression de soufflage si possible sensiblement moindre (mais susceptible d'entraîner un plaquage insuffisant de la matière contre le moule), et surtout avec des cadences de production toujours accrues (nécessitant que, lors du moulage, la matière se déplace plus rapidement).

Les parties les plus délicates à souffler sont les parties du fond de moule qui présentent la distance la plus grande par rapport à l'axe central du fond de moule.

Cette difficulté est d'autant plus accentuée quand il existe des zones dans le fond du moule dans lesquelles la matière soufflée est susceptible de s'accumuler, laquelle accumulation peut empêcher ladite matière de s'écouler librement et de se plaquer sur tout le fond de moule.

C'est notamment le cas lorsqu'on ajoute une rainure dans le fond du moule pour permettre un renforcement de la rigidité radiale du fond du récipient. Cette solution aboutit à des difficultés de plaquage de la matière soufflée au niveau de la rainure et à un blocage de l'écoulement de la matière soufflée.

Ces problèmes peuvent se produire pour des récipients du type de ceux qui sont notamment décrits dans les documents FR 2 892 048 et GB 2 041 286. De plus, dans le cas du document GB 2 041 286, il faut noter que la présence d'un bourrelet favorise le déséquilibre des bouteilles lors de leur manutention et en particulier lors de leur convoyage ; les récipients ont en effet tendance à s'encastrer et à se soulever l'un l'autre, ce qui nuit à leur stabilité.

Il n'existe donc pas, selon l'art antérieur, de solutions qui permettent une élaboration correcte par moulage d'un fond de récipient avec une rigidité radiale renforcée tout en facilitant ce moulage par soufflage ou étirage-soufflage d'une préforme appropriée. L'invention se propose de résoudre ces problèmes.

On connait du document EP 1471010 un récipient du type obtenu par une opération d'étirage-soufflage d'une préforme en matière thermoplastique, constitué d'un fond surmonté d'un corps tubulaire, lequel récipient comprend:
- une assise présentant une partie centrale et une paroi périphérique dont la concavité est orientée vers l'intérieur dudit récipient, ladite paroi périphérique concave s'étendant de manière sensiblement coaxiale avec l'axe dudit récipient, et ladite concavité définissant en tout point de ladite paroi périphérique concave une courbure non nulle,
- une zone annulaire située au-dessus de ladite assise, formant une paroi périphérique tubulaire, la paroi périphérique tubulaire étant cylindrique ou de forme prismatique à multiples facettes, ladite zone annulaire se situant dans le prolongement de la partie inférieure, au moins, dudit corps tubulaire,
- la distance radiale entre ledit axe et ladite paroi périphérique tubulaire étant supérieure à la distance radiale entre ledit axe et tout point de ladite paroi périphérique concave de ladite assise.

Selon un premier aspect, l'invention porte sur un récipient tel que défini par la revendication 1.

Selon une forme de réalisation avantageuse non conforme à l'invention, l'épaulement comporte au moins une paroi sensiblement rectiligne transversale à l'axe du récipient ainsi qu'au moins une paroi sensiblement rectiligne parallèle à l'axe dudit récipient.

Selon une autre forme de réalisation avantageuse non conforme à l'invention, l'épaulement comporte au moins une paroi inclinée par rapport à l'axe du récipient.

Toujours selon l'invention, la profondeur de l'épaulement est de l'ordre de 0,5 à 2%, de préférence de 1 à 1,5%, notamment 1,2% du diamètre de la zone annulaire.

Selon une autre disposition de l'invention, la profondeur de l'épaulement est comprise entre 0,5 et 2,5 mm pour un récipient dont le diamètre de la partie inférieure du corps tubulaire est respectivement compris entre 50 et 120 mm.

Toujours selon l'invention, le rayon de courbure moyen de la paroi périphérique concave de l'assise est compris entre 5 et 20 mm.

Selon une autre disposition de l'invention, le rayon de courbure de la paroi périphérique concave de l'assise est variable entre la partie centrale de ladite assise et l'épaulement.

Toujours selon l'invention, la hauteur de la paroi périphérique concave de l'assise est comprise entre 5 et 15 mm.

L'invention concerne également un moule permettant l'obtention de ce type de récipient tel que défini par les revendications.

Toujours selon une forme de réalisation avantageuse, l'empreinte de l'épaulement comporte au moins une paroi sensiblement rectiligne transversale à l'axe du moule ainsi qu'au moins une paroi sensiblement rectiligne parallèle audit axe.

Selon une autre forme de réalisation avantageuse, l'empreinte de l'épaulement comporte au moins une paroi inclinée par rapport à l'axe du moule.

Toujours selon l'invention, la profondeur de l'empreinte de l'épaulement est de l'ordre de 0,5 à 2%, de préférence de 1 à 1,5%, notamment 1,2% du diamètre de la zone annulaire.

Selon une autre disposition de l'invention, la profondeur de l'empreinte de l'épaulement est comprise entre 0,5 et 2,5 mm pour un moule dont le diamètre interne de la partie inférieure du corps est respectivement compris entre 50 et 120 mm.

Toujours selon l'invention, le rayon de courbure moyen de la paroi périphérique concave de l'assise est compris entre 5 et 20 mm.

Selon une autre disposition de l'invention, le rayon de courbure de la paroi périphérique concave de l'assise est variable entre la partie centrale de ladite assise et l'épaulement.

Toujours selon l'invention, la hauteur de la paroi périphérique de l'assise est comprise entre 5 et 15 mm.

La présente invention est maintenant décrite à l'aide d'un exemple uniquement illustratif et nullement limitatif de la portée de la présente invention, et à partir des figures ci-jointes, dans lesquelles :
- la figure 1 représente le profil d'un récipient selon l'invention, du genre obtenu avec un moule qui comprend un fond associé à deux demi-moules ;
- la figure 2 est une vue agrandie de la zone du fond du récipient, et du profil de l'empreinte correspondante aménagée dans le moule, selon l'invention ;
- la figure 3 est une vue agrandie du pourtour du fond du récipient, et du profil de l'empreinte correspondante du moule, qui ne fait pas partie de l'invention, et
- la figure 4 est une vue agrandie du pourtour du fond du récipient, et du profil de l'empreinte correspondante du moule, qui ne fait pas partie de l'invention.

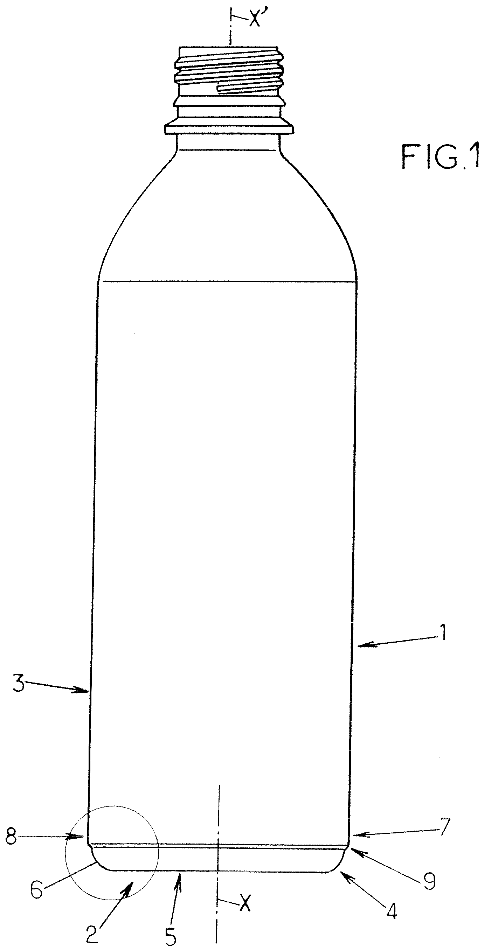

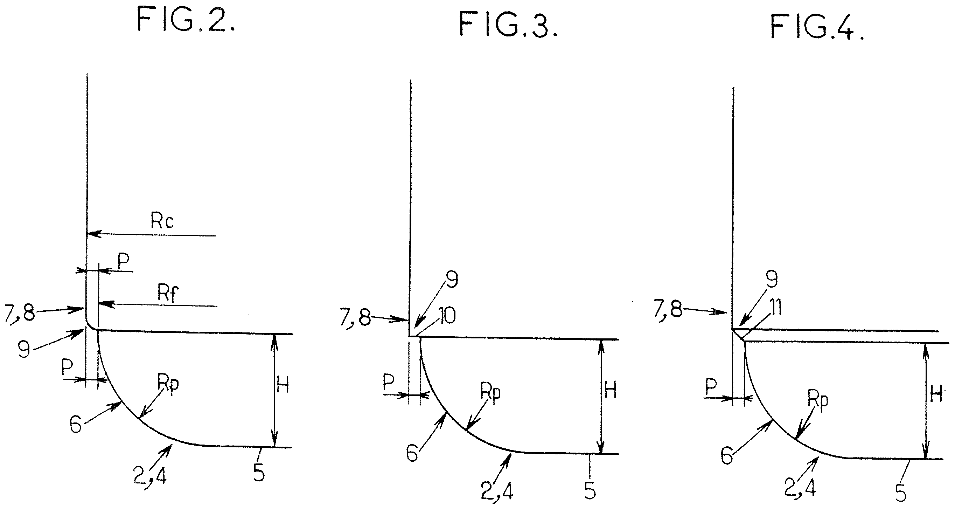

Les figures 1 et 2 illustrent une vue générale d'un récipient 1, en forme de bouteille, dont le contour correspond au profil de l'empreinte du moule qui permet son moulage, par une opération de soufflage ou étirage-soufflage d'une préforme, non représentée, en matière thermoplastique telle que du PET.

Ce récipient 1 comprend un fond 2 surmonté d'un corps 3 tubulaire, le tout centré sur un axe X-X'. La réalisation de ce récipient 1 nécessite un moule, non représenté, qui comprend, de façon classique, deux demi-moules et un fond, comme décrits, par exemple, dans les documents FR 2 912 952 et FR 2 883 794.

Le fond 2 du récipient 1 comprend un assise 4 qui est constituée d'une partie centrale 5 et d'une paroi 6 périphérique concave, les deux s'étendant de manière sensiblement coaxiale à l'axe X-X' dudit récipient 1. La concavité de la paroi 6 est orientée vers l'intérieur du récipient 1 et cette concavité définit, en tout point de ladite paroi 6, une courbure non nulle, c'est-à-dire qu'il n'existe pas de zone rectiligne sur cette paroi 6.

La partie centrale 5 de l'assise 4 peut être soit totalement lisse, soit avoir une forme structurée selon toute forme appropriée.

Le fond 2 du récipient 1 comprend également une zone 7 annulaire qui constitue la partie basse d'une paroi 8 périphérique tubulaire du corps 3, sensiblement coaxiale à l'axe X-X'. La distance radiale transversale entre l'axe X-X' du récipient et la paroi 8 périphérique tubulaire de la zone 7 annulaire est supérieure à la distance radiale transversale qui existe entre l'axe X-X' et tout point de la paroi 6 périphérique concave de l'assise 4.

Le fond 2 du récipient 1 comprend encore un épaulement 9 qui forme une zone de liaison entre l'assise 4 et la zone 7 annulaire. Autrement dit, l'épaulement 9 est prévu à la fin de la courbure (ou d'une partie en courbe) de l'assise 4, de sorte que cette assise ne présente zone rectiligne qui soit sensiblement parallèle à l'axe X-X' du récipient 1.

Cet aménagement permet d'obtenir un fond 2 de récipient qui présente une rigidité radiale renforcée et qui présente également une meilleure résistance à une charge verticale, et cet aménagement est obtenu sans entraver l'écoulement de la matière de la préforme, qui est soufflée lors de l'opération d'étirage-soufflage dans le moule approprié.

Selon le mode de réalisation représenté figure 2, l'épaulement 9 présente une concavité qui définit, en tous points de son profil, une courbure non nulle. La paroi 6 périphérique concave de l'assise 4, d'une part, et l'épaulement 9, d'autre part, ne forment aucune zone dont le profil serait sensiblement rectiligne, c'est-à-dire à courbure nulle ou infinie, du type coaxiale ou transversale à l'axe X-X' du récipient ; cet épaulement 9 définit une zone générale concave, tournée vers l'intérieur du récipient, et dans laquelle la matière thermoplastique soufflée, de la préforme, est apte à s'écouler, sans rencontrer de zone susceptible de provoquer une accumulation de la matière thermoplastique soufflée.

Préférentiellement, selon ce mode de réalisation, la courbure définie par la concavité de l'épaulement 9 est plus petite que la courbure définie par le profil de la paroi 6 périphérique concave de l'assise 4.

Selon un mode de réalisation alternatif, tel qu'illustré sur la figure 3, l'épaulement 9 se présente sous la forme d'un décrochement et il comporte une paroi 10 sensiblement rectiligne, transversale à l'axe X-X' du récipient, laquelle paroi 10 s'étend entre la paroi 6 périphérique concave de l'assise 4 et la paroi 8 périphérique tubulaire de cette même assise.

La paroi 8 périphérique tubulaire correspond à au moins la partie inférieure du corps 3 tubulaire du récipient 1, c'est-à-dire que cette paroi se situe dans le prolongement d'au moins la partie inférieure dudit corps 3.

Toutefois, il est envisageable que la partie inférieure du corps 3 tubulaire du récipient 1 ne soit pas strictement confondue avec la paroi 8 périphérique tubulaire. Il est ainsi possible que cette paroi 8 périphérique tubulaire de la zone 7 annulaire soit située à une distance radiale transversale légèrement inférieure ou supérieure (par exemple, de l'ordre du millimètre, voire du dixième de millimètre) à la distance radiale transversale de la paroi du corps 3 tubulaire.

Selon un autre mode alternatif non représentatif de l'invention, tel qu'illustré sur la figure 4, l'épaulement 9 comporte une paroi 11 inclinée par rapport à l'axe X-X' du récipient 1. A titre d'exemple, la paroi 11 inclinée présente un angle qui peut varier d'un angle dont l'inclinaison est nulle (dans ce cas, l'épaulement 9 est sous la forme telle qu'illustrée sur la figure 3) à un angle dont l'inclinaison maximale est, par exemple, de l'ordre de 45 degrés (dans ce cas, l'épaulement est sous la forme telle qu'illustrée sur la figure 4).

Il est également possible de prévoir une forme de réalisation de l'épaulement 9 combinant à la fois le mode de réalisation illustré figure 3 et celui qui est illustré figure 4, c'est-à-dire un épaulement 9 présentant tout d'abord une paroi sensiblement rectiligne transversale à l'axe X-X', puis une ou plusieurs parois inclinées, pour finir avec la paroi 8 périphérique tubulaire qui est centrée sur ledit axe X-X'. L'épaulement 9 peut donc se présenter sous la forme d'une pluralité d'intersections vives ou de pentes.

La profondeur P de l'épaulement 9, à savoir la distance radiale transversale entre le point de liaison de la paroi 6 périphérique concave de l'assise 4 et le point le plus éloigné radialement et transversalement dudit épaulement 9, à savoir la paroi 8 périphérique tubulaire, est comprise entre 0,5 et 2,5 mm pour un diamètre de récipient allant, par exemple, de 50 à 120 mm.

Cette profondeur P de l'épaulement 9, peut également être comprise entre 0,5 et 2%, de préférence de 1 à 1,5%, notamment 1,2% du diamètre de la zone annulaire 7, en partie basse du corps 3 tubulaire du récipient 1, selon le type et la nature dudit récipient.

Comme montré sur la figure 2, cette profondeur P de l'épaulement 9 correspond à la différence entre le rayon Rc de la paroi 8 périphérique tubulaire et le rayon Rf de la paroi 6 périphérique concave, à son extrémité supérieure, au niveau dudit épaulement 9.

Par ailleurs, bien que la paroi 6 périphérique de l'assise 4 soit de forme générale concave, il convient de noter que cette paroi 6 peut se présenter avec un profil offrant plusieurs rayons de courbure différents ; le rayon Rp de courbure moyen de cette paroi 6 périphérique concave étant avantageusement compris entre 5 et 20 mm.

De manière préférentielle, la hauteur H de la paroi 6 périphérique concave de l'assise 4 est comprise entre 5 et 15 mm; cette hauteur H est mesurée entre la partie centrale 5 de l'assise 4 et la zone de jonction entre l'épaulement 9 et ladite assise 4.

Le récipient 1, tel que détaillé auparavant, est du type ayant une contenance comprise entre 0,2 et 2 litres, voire jusqu'à 4 litres, étant entendu que les valeurs du rayon R de courbure moyen de la paroi 6 périphérique concave, de la hauteur H de cette paroi 6 périphérique concave ainsi que de la profondeur P de l'épaulement 9, peuvent être en partie dépendantes de la capacité volumique du récipient 1 moulé.

De manière préférentielle, la paroi 8 périphérique tubulaire de la zone 7 annulaire est de forme sensiblement cylindrique, dans le prolongement du corps 3, comme mentionné précédemment ; toutefois, cette paroi 8 périphérique tubulaire peut également être de forme prismatique, à multiples facettes.

Le récipient 1 tel que détaillé ci-dessus est donc obtenu au moyen d'un moule, non représenté, qui fait partie de l'invention, lequel moule comprend différents éléments constituant une cavité permettant de réaliser les différentes parties dudit récipient, à savoir le fond 2 et le corps 3 du récipient et ladite cavité comprenant notamment une empreinte de l'assise qui correspond à l'assise 4 dudit récipient, une empreinte de la zone annulaire qui correspond à la zone 7 annulaire dudit récipient et une empreinte de l'épaulement qui correspond à l'épaulement 9 dudit récipient 1 ; ces différents éléments de l'empreinte du moule sont représentés sur les figures 2 à 4.

Dans une première mise en oeuvre, le moule est simplement constitué de deux demi-moules permettant de réaliser le fond 2 et le corps 3 du récipient.

Dans une variante de réalisation, le moule est constitué de deux demi-moules et d'un fond de moule. Selon la complexité du fond 2 du récipient, soit les demi-moules servent d'empreinte au corps 3 dudit récipient et le fond du moule sert d'empreinte audit fond 2 du récipient, incluant l'assise 4, la zone annulaire 7 et l'épaulement 9 entre ladite assise 4 et ladite zone annulaire 7, soit le fond de moule sert d'empreinte à une partie seulement du fond 2 du récipient, par exemple l'assise ou une partie de celle-ci ou encore l'assise et l'épaulement, et les demi-moules servent alors d'empreinte au corps 3 du récipient et à la partie du fond 2 du récipient non contenue dans ledit fond du moule.

Sur ce moule, l'empreinte de l'assise présente une partie centrale correspondant à la partie centrale 5 de l'assise dudit récipient 1, et une empreinte de la paroi périphérique concave qui correspond à la paroi 8 périphérique concave dudit récipient, laquelle empreinte de ladite paroi périphérique concave présente une concavité orientée vers l'intérieur du moule, et cette empreinte de la paroi périphérique concave s'étend de manière sensiblement coaxiale avec l'axe dudit moule, ladite concavité définissant en tout point de ladite empreinte de ladite paroi périphérique concave une courbure non nulle.

L'empreinte de la zone annulaire du moule, située au dessus de l'empreinte de l'assise, forme une empreinte de paroi périphérique tubulaire qui se situe dans le prolongement d'au moins la partie inférieure tubulaire du moule qui correspond à l'empreinte du corps 3 tubulaire du récipient 1.

Le moule comprend encore une empreinte d'épaulement qui forme une zone de liaison entre l'empreinte de l'assise et celle de la zone annulaire.

La distance radiale entre l'axe du moule et la paroi périphérique tubulaire de la zone annulaire est supérieure à la distance radiale entre ledit axe et tout point de ladite paroi périphérique concave de l'assise.

L'empreinte de l'épaulement du moule, situé entre l'assise et la zone annulaire, présente une concavité dont le profil se caractérise par une courbure non nulle pour permettre l'obtention d'un récipient 1 ayant un fond 2 tel que représenté figure 2.

Selon une variante de réalisation, l'empreinte de l'épaulement entre l'assise et la zone annulaire du moule peut comporter au moins une paroi sensiblement rectiligne transversale à l'axe du moule, ainsi qu'une paroi sensiblement rectiligne parallèle audit axe, pour l'obtention d'un récipient 1 dont le fond 2 présente une forme telle qu'illustrée figure 3.

Selon une autre forme de réalisation, l'empreinte de l'épaulement situé entre l'assise et la zone annulaire du moule comporte au moins une paroi inclinée par rapport à l'axe dudit moule de façon à obtenir un récipient 1 dont le fond 2 correspond à celui qui est représenté figure 4.

La profondeur P de l'empreinte de l'épaulement, sur le moule, est, par exemple, de l'ordre de 0,5 à 2%, de préférence de 1 à 1,5%, notamment 1,2% du diamètre de la zone annulaire 7, en partie basse du corps 3 tubulaire du récipient 1, pour des récipients dont le volume est, par exemple, compris entre 0,2 à 2 litres, voire plus, 4 litres.

Cette profondeur P de l'empreinte de l'épaulement du moule peut également être comprise entre 0,5 et 2,5 mm pour des récipients 1 dont le diamètre du corps tubulaire est de l'ordre de 50 à 120 mm.

Le rayon Rp de courbure moyen au niveau de l'assise du moule, pour la paroi périphérique concave, peut être compris entre 5 et 20 mm. Ce rayon Rp de courbure peut également être variable entre l'assise proprement dite et l'épaulement.

La hauteur H de la paroi périphérique de l'assise du fond du moule est par exemple comprise entre 5 et 15 mm.

Le plan de joint entre le fond du moule et les deux demi-moules peut se situer au niveau de la jonction entre l'assise et l'épaulement, mais il peut également se situer au niveau de la zone annulaire, en tout point de cette dernière à partir de l'épaulement jusqu'à un niveau qui correspond à la partie inférieure du corps tubulaire du moule et du récipient 1.

## Revendications

1. Récipient (1) du type obtenu par une opération d'étirage-soufflage d'une préforme en matière thermoplastique, constitué d'un fond (2) surmonté d'un corps (3) tubulaire, lequel récipient comprend:
- une assise (4) présentant une partie centrale (5) et une paroi (6) périphérique dont la concavité est orientée vers l'intérieur dudit récipient (1), ladite paroi (6) périphérique concave s'étendant de manière sensiblement coaxiale avec l'axe X-X' dudit récipient (1), et ladite concavité définissant en tout point de ladite paroi (6) périphérique concave une courbure non nulle,
- une zone (7) annulaire située au-dessus de ladite assise (4), formant une paroi (8) périphérique tubulaire, la paroi périphérique tubulaire (8) étant cylindrique ou de forme prismatique à multiples facettes, ladite zone (7) annulaire se situant dans le prolongement de la partie inférieure, au moins, dudit corps (3) tubulaire,
- la distance radiale entre ledit axe X-X' et ladite paroi (8) périphérique tubulaire étant supérieure à la distance radiale entre ledit axe X-X' et tout point de ladite paroi (6) périphérique concave de ladite assise (4),
**caractérisé en ce qu'**un épaulement (9) est prévu entre l'assise (4) et la zone (7) annulaire, formant une zone de liaison, l'épaulement (9) présentant une concavité tournée vers l'intérieur du récipient définissant en tout point de son profil une courbure non nulle.

2. Récipient selon la revendication 1, **caractérisé en ce que** la profondeur P de l'épaulement (9) est de l'ordre de 0,5 à 2%, de préférence de 1 à 1,5%, notamment 1,2% du diamètre de la zone (7) annulaire.

3. Récipient selon la revendication 1, **caractérisé en ce que** la profondeur P de l'épaulement (9) est comprise entre 0,5 et 2,5 mm pour un récipient dont le diamètre de la partie inférieure du corps (3) tubulaire est respectivement compris entre 50 et 120 mm.

4. Récipient selon la revendication 1, **caractérisé en ce que** le rayon Rp de courbure moyen de la paroi (6) périphérique concave de l'assise (4) est compris entre 5 et 20 mm.

5. Récipient selon la revendication 1, **caractérisé en ce que** le rayon Rp de courbure de la paroi (6) périphérique concave de l'assise (4) est variable entre la partie centrale (5) de ladite assise (4) et l'épaulement (9).

6. Récipient selon la revendication 1, **caractérisé en ce que** la hauteur H de la paroi (6) périphérique concave de l'assise (4) est comprise entre 5 et 15 mm.

7. Moule pour la confection d'un récipient du type obtenu par une opération d'étirage-soufflage d'une préforme en matière thermoplastique, lequel moule comprend différents éléments constituant une cavité permettant de réaliser les différentes parties du récipient, à savoir le fond (2) dudit récipient et corps (3) dudit récipient, ladite cavité comprenant notamment:
- une empreinte d'une assise présentant une partie centrale et une paroi périphérique concave dont la concavité est orientée vers l'intérieur, ladite paroi s'étendant de manière sensiblement coaxiale avec l'axe dudit moule, ladite concavité définissant en tout point de ladite paroi périphérique concave une courbure non nulle,
- une empreinte d'une zone annulaire située au-dessus de ladite assise, formant une paroi périphérique la paroi périphérique étant parallèle à l'axe du moule, ladite zone annulaire se situant dans le prolongement de la partie inférieure, au moins, de l'empreinte du corps tubulaire,
- la distance radiale entre l'axe dudit moule et ladite paroi périphérique tubulaire étant supérieure à la distance radiale entre ledit axe et tout point de ladite paroi périphérique concave de l'empreinte de ladite assise,
**caractérisé en ce qu'**un épaulement (9) est prévu entre l'assise et la zone annulaire, formant une zone de liaison, l'épaulement (9) présentant une concavité tournée vers l'intérieur du moule définissant en tout point de son profil une courbure non nulle..

8. Moule selon la revendication 7, **caractérisé en ce que** la profondeur de l'empreinte de l'épaulement est de l'ordre de 0,5 à 2%, de préférence de 1 à 1,5%, notamment 1,2% du diamètre de la zone annulaire.

9. Moule selon la revendication 7, **caractérisé en ce que** la profondeur de l'empreinte de l'épaulement est comprise entre 0,5 et 2,5 mm pour un moule dont le diamètre interne de la partie inférieure tubulaire de l'empreinte du corps tubulaire est respectivement compris entre 50 et 120 mm.

10. Moule selon la revendication 7, **caractérisé en ce que** le rayon de courbure moyen de la paroi périphérique concave de l'empreinte de l'assise est compris entre 5 et 20 mm.

11. Moule selon la revendication 7, **caractérisé en ce que** le rayon de courbure de la paroi périphérique de l'empreinte de l'assise est variable entre l'assise proprement dite et l'épaulement.

12. Moule selon la revendication 7, **caractérisé en ce que** la hauteur de la paroi périphérique de l'empreinte de l'assise est comprise entre 5 et 15 mm.

## Patentansprüche

1. Behälter (1), der durch einen Streckblasvorgang aus einem Vorformling aus thermoplastischem Material erhalten wird, der aus einem Boden (2), auf dem ein rohrförmiger Körper (3) angeordnet ist, besteht, wobei der Behälter Folgendes umfasst:
- eine Basis (4), die einen mittleren Teil (5) und eine Umfangswand (6), deren Konkavität zum Inneren des Behälters (1) hin ausgerichtet ist, aufweist, wobei sich die konkave Umfangswand (6) mit der X-X'-Achse des Behälters (1) im Wesentlichen koaxial erstreckt und die Konkavität an jedem Punkt der konkaven Umfangswand (6) eine Krümmung von ungleich null definiert,
- einen ringförmigen Bereich (7), der sich über der Basis (4) befindet, der eine rohrförmige Umfangswand (8) bildet, wobei die rohrförmige Umfangswand (8) zylinderförmig ist oder eine Prismaform mit mehreren Facetten aufweist, wobei sich der ringförmige Bereich (7) in der Verlängerung mindestens des unteren Teils des rohrförmigen Körpers (3) befindet,
- wobei der radiale Abstand zwischen der X-X'-Achse und der rohrförmigen Umfangswand (8) größer als der radiale Abstand zwischen der X-X'-Achse und jedem Punkt der konkaven Umfangswand (6) der Basis (4) ist,
**dadurch gekennzeichnet, dass** eine Schulter (9) zwischen der Basis (4) und dem ringförmigen Bereich (7) vorgesehen ist, die einen Verbindungsbereich bildet, wobei die Schulter (9) eine zum Inneren des Behälters gedrehte Konkavität aufweist, die an jedem Punkt ihres Profils eine Krümmung von ungleich null definiert.

2. Behälter nach Anspruch 1, **dadurch gekennzeichnet, dass** die Tiefe P der Schulter (9) von 0,5 bis 2 %, vorzugsweise von 1 bis 1,5 %, insbesondere 1,2 % des Durchmessers des ringförmigen Bereichs (7) beträgt.

3. Behälter nach Anspruch 1, **dadurch gekennzeichnet, dass** die Tiefe P der Schulter (9) für einen Behälter, dessen Durchmesser des unteren Teils des rohrförmigen Körpers (3) jeweils zwischen 50 und 120 mm beträgt, zwischen 0,5 und 2,5 mm liegt.

4. Behälter nach Anspruch 1, **dadurch gekennzeichnet, dass** der durchschnittliche Krümmungsradius Rp der konkaven Umfangswand (6) der Basis (4) zwischen 5 und 20 mm liegt.

5. Behälter nach Anspruch 1, **dadurch gekennzeichnet, dass** der Krümmungsradius Rp der konkaven Umfangswand (6) der Basis (4) zwischen dem mittleren Teil (5) der Basis (4) und der Schulter (9) variabel ist.

6. Behälter nach Anspruch 1, **dadurch gekennzeichnet, dass** die Höhe H der konkaven Umfangswand (6) der Basis (4) zwischen 5 und 15 mm liegt.

7. Formwerkzeug zur Konfektionierung eines Behälters, der durch einen Streckblasvorgang aus einem Vorformling aus thermoplastischem Material erhalten wird, wobei das Formwerkzeug verschiedene Elemente umfasst, die einen Hohlraum bilden, der eine Ausbildung der verschiedenen Teile des Behälters gestattet, und zwar des Bodens (2) des Behälters und des Körpers (3) des Behälters, wobei der Hohlraum insbesondere Folgendes umfasst:
- einen Abdruck einer Basis, die einen mittleren Teil und eine konkave Umfangswand, deren Konkavität zum Inneren hin ausgerichtet ist, aufweist, wobei sich die Wand mit der Achse des Formwerkzeugs im Wesentlichen koaxial erstreckt, wobei die Konkavität an jedem Punkt der konkaven Umfangswand eine Krümmung von ungleich null definiert,
- einen Abdruck eines ringförmigen Bereichs, der sich über der Basis befindet, der eine Umfangswand bildet, wobei die Umfangswand zur Achse des Formwerkzeugs parallel ist, wobei sich der ringförmige Bereich in der Verlängerung mindestens des unteren Teils des Abdrucks des rohrförmigen Körpers befindet,
- wobei der radiale Abstand zwischen der Achse des Formwerkzeugs und der rohrförmigen Umfangswand größer als der radiale Abstand zwischen der Achse und jedem Punkt der konkaven Umfangswand des Abdrucks der Basis ist,
**dadurch gekennzeichnet, dass** eine Schulter (9) zwischen der Basis und dem ringförmigen Bereich vorgesehen ist, die einen Verbindungsbereich bildet, wobei die Schulter (9) eine zum Inneren des Formwerkzeugs gedrehte Konkavität aufweist, die an jedem Punkt ihres Profils eine Krümmung von ungleich null definiert.

8. Formwerkzeug nach Anspruch 7, **dadurch gekennzeichnet, dass** die Tiefe des Abdrucks der Schulter von 0,5 bis 2 %, vorzugsweise von 1 bis 1,5 %, insbesondere 1,2 % des Durchmessers des ringförmigen Bereichs beträgt.

9. Formwerkzeug nach Anspruch 7, **dadurch gekennzeichnet, dass** die Tiefe des Abdrucks der Schulter für ein Formwerkzeug, dessen Innendurchmesser des unteren rohrförmigen Teils des Abdrucks des rohrförmigen Körpers jeweils zwischen 50 und 120 mm beträgt, zwischen 0,5 und 2,5 mm liegt.

10. Formwerkzeug nach Anspruch 7, **dadurch gekennzeichnet, dass** der durchschnittliche Krümmungsradius der konkaven Umfangswand des Abdrucks der Basis zwischen 5 und 20 mm liegt.

11. Formwerkzeug nach Anspruch 7, **dadurch gekennzeichnet, dass** der Krümmungsradius der Umfangswand des Abdrucks der Basis zwischen der Basis selbst und der Schulter variabel ist.

12. Formwerkzeug nach Anspruch 7, **dadurch gekennzeichnet, dass** die Höhe der Umfangswand des Abdrucks der Basis zwischen 5 und 15 mm liegt.

## Claims

1. Container (1) of the type obtained by stretch-blow-moulding of a blank made of thermoplastic material, consisting of a base (2) above which is a tubular body (3), which container comprises:
- a seat (4) having a central portion (5) and a peripheral wall (6) which is concave towards the interior of said container (1), said concave peripheral wall (6) extending essentially coaxially with the axis X-X' of said container (1), and said concavity defining, at all points on said concave peripheral wall (6), a nonzero curvature,
- an annular region (7) located above said seat (4), forming a tubular peripheral wall (8), the tubular peripheral wall (8) being cylindrical or prismatic with multiple facets, said annular region (7) being located in the extension of the lower portion, at least, of said tubular body (3),
- the radial distance between said axis X-X' and said tubular peripheral wall (8) being greater than the radial distance between said axis X-X' and any point on said concave peripheral wall (6) of said seat (4),
**characterized in that** a shoulder (9) is provided between the seat (4) and the annular region (7), forming a connecting region, the shoulder (9) being concave towards the interior of the container, defining a nonzero curvature at all points of its profile.

2. Container according to Claim 1, **characterized in that** the depth P of the shoulder (9) is of the order of 0.5 to 2%, preferably 1 to 1.5% and in particular 1.2%, of the diameter of the annular region (7).

3. Container according to Claim 1, **characterized in that** the depth P of the shoulder (9) is between 0.5 and 2.5 mm for a container in which the diameter of the lower portion of the tubular body (3) is respectively between 50 and 120 mm.

4. Container according to Claim 1, **characterized in that** the average radius of curvature Rp of the concave peripheral wall (6) of the seat (4) is between 5 and 20 mm.

5. Container according to Claim 1, **characterized in that** the radius of curvature Rp of the concave peripheral wall (6) of the seat (4) is variable between the central portion (5) of said seat (4) and the shoulder (9).

6. Container according to Claim 1, **characterized in that** the height H of the concave peripheral wall (6) of the seat (4) is between 5 and 15 mm.

7. Mould for making a container of the type obtained by stretch-blow-moulding of a blank made of thermoplastic material, which mould comprises various elements forming a cavity by means of which it is possible to create the various portions of the container, specifically the base (2) of said container and the body (3) of said container, said cavity comprising in particular:
- an imprint for a seat having a central portion and a concave peripheral wall which is concave towards the interior, said wall extending essentially coaxially with the axis of said mould, said concavity defining, at all points on said concave peripheral wall, a nonzero curvature,
- an imprint for an annular region located above said seat, forming a peripheral wall, the peripheral wall being parallel to the axis of the mould, said annular region being located in the extension of the lower portion, at least, of the imprint for the tubular body,
- the radial distance between the axis of said mould and said tubular peripheral wall being greater than the radial distance between said axis and any point on said concave peripheral wall of the imprint for said seat,
**characterized in that** a shoulder (9) is provided between the seat and the annular region, forming a connecting region, the shoulder (9) being concave towards the interior of the mould, defining a nonzero curvature at all points of its profile.

8. Mould according to Claim 7, **characterized in that** the depth of the imprint for the shoulder is of the order of 0.5 to 2%, preferably 1 to 1.5% and in particular 1.2%, of the diameter of the annular region.

9. Mould according to Claim 7, **characterized in that** the depth of the imprint for the shoulder is between 0.5 and 2.5 mm for a mould in which the internal diameter of the tubular lower portion of the imprint for the tubular body is respectively between 50 and 120 mm.

10. Mould according to Claim 7, **characterized in that** the average radius of curvature of the concave peripheral wall of the imprint for the seat is between 5 and 20 mm.

11. Mould according to Claim 7, **characterized in that** the radius of curvature of the peripheral wall of the imprint for the seat is variable between the seat proper and the shoulder.

12. Mould according to Claim 7, **characterized in that** the height of the peripheral wall of the imprint for the seat is between 5 and 15 mm.
